# EUROPEAN PATENT SPECIFICATION

(11) **EP 2 950 183 B1**
(45) Date of publication and mention of the grant of the patent: **04.10.2023**
(21) Application number: 15168938.7
(22) Date of filing: 22.05.2015
(51) Int. Cl.: G06F 3/01, G01C 17/00, G06T 11/00

(54) **METHOD AND APPARATUS FOR MEASURING DIRECTION AND TERMINAL**
VERFAHREN UND VORRICHTUNG ZUR MESSUNG DER RICHTUNG UND ENDGERÄT
PROCÉDÉ ET APPAREIL DE MESURE DE DIRECTION ET TERMINAL

(30) Priority: 27.05.2014 CN 201410227627
(43) Date of publication of application: 02.12.2015
(73) Proprietor: Xiaomi Inc., Beijing 100085 (CN)
(72) Inventor: ZHU, Yin, Beijing 100085 (CN); HAN, Wei, Beijing 100085 (CN); HU, Xiaowei, Beijing 100085 (CN)
(74) Representative: Cabinet Beau de Loménie

(56) References cited:
- CN-A- 103 677 220
- US-A1- 2007 027 591
- US-A1- 2010 225 756
- US-A1- 2011 141 254
- US-A1- 2013 328 929

## Description

### TECHNICAL FIELD

The present disclosure generally relates to the field of computer technology, and particularly, to a method for measuring a direction, and a terminal.

### BACKGROUND

With the development of terminal technology, terminals tend to have increasingly versatile functions. For example, a compass APP (application) may be installed on a terminal to measure a direction. If a direction needs to be measured, the installed compass APP is initiated by the terminal, and a virtual dial plate provided by the compass APP is displayed on the terminal interface, to display all the directions on the virtual dial plate.
In the process of implementing the present disclosure, it is found by the applicant that at least the following deficiency existing in the related art: the compass APP may only display all the directions on the terminal interface.

The prior art document US 2010/225756 A1 is directed at an electronic device configured to display directions, including a facing direction of the device, to a user, to determine a tilting angle of the device, and to display the directions only when the device is tilted.

### SUMMARY

In order to solve the issue in the related art, a method and a terminal are provided by the present disclosure.

According to a first aspect, the invention relates to a method according to claim 1.

In the sense of the invention, "an objective image" corresponds to an image of the scene in real-time.

According to a second aspect, the invention relates to a terminal according to claim 3.

In one particular embodiment, the steps of the method for processing an application program are determined by computer program instructions.

Consequently, according to a third aspect, the invention is also directed to a computer program according to claim 5.

This program can use any programming language and take the form of source code, object code or a code intermediate between source code and object code, such as a partially compiled form, or any other desirable form.

The invention is also directed to a computer-readable information medium according to claim 6.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Further advantageous embodiments of the present invention are defined in the dependent claims.

Some advantageous effects brought by the technical solutions provided by the embodiments of the present disclosure may include the follows.

While the terminal runs the compass APP, the camera is started, and an objective image is acquired through the camera; a facing direction of the camera is determined through the compass APP; and the facing direction is displayed in the objective image. Therefore, the facing direction of the camera may be served as the objective direction to be directly displayed in the objective image, so that the issue that the terminal cannot provide a direction in an objective image to the user may be solved, and thus achieve an effect of expanding the function of direction measurement of the terminal.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1A is a flow chart showing a method for measuring a direction according to an exemplary embodiment.
Fig.1B is a schematic view showing a facing direction of a camera according to the embodiment.
Fig.2A is a flow chart showing a method for measuring a direction according to another exemplary embodiment.
Fig.2B is a schematic view showing a manner of establishing a coordinate system according to the embodiment.
Fig.2C is a schematic view showing a facing direction of a camera according to the embodiment.
Fig.2D is a schematic view showing an application of a direction measurement according to the embodiment.
Fig.2E is a schematic view showing a terminal displaying a direction according to the embodiment.
Fig.2F is a schematic view showing an application of deflecting a direction according to the embodiment.
Fig.3 is a block diagram showing an apparatus for measuring a direction according to an exemplary embodiment.
Fig.4 is a block diagram showing an apparatus for measuring a direction according to an exemplary embodiment.
Fig.5 is a block diagram showing a device for measuring a direction according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the disclosure as recited in the appended claims.

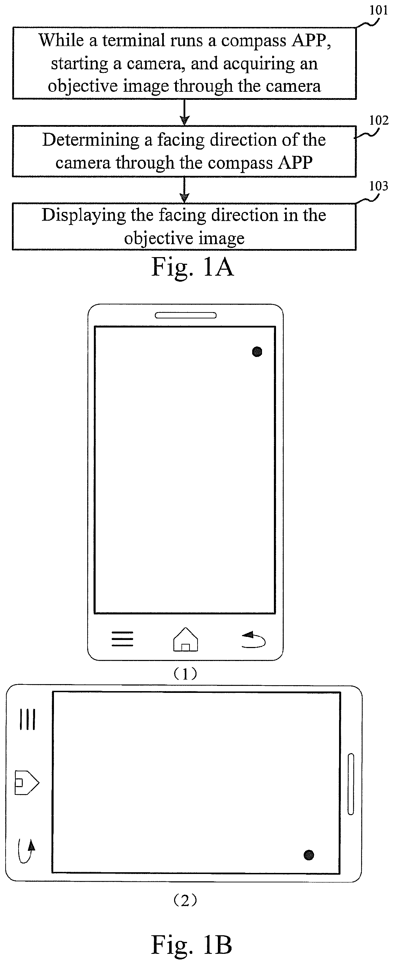

Fig.1A is a flow chart showing a method for measuring a direction according to an exemplary embodiment. As shown in Fig.1A, the method for measuring a direction may be applied to, but not limited to, a terminal including a camera and a compass APP, and the method includes the following steps.

In step 101, while the terminal runs the compass APP, the camera is started, and an objective image is acquired through the camera.

During a process that the terminal runs the compass APP, the terminal starts the camera, and a current objective image is photographed through the camera.

In step 102, a facing direction of the camera is determined through the compass APP.

Since the camera is mounted in the terminal and the compass APP may measure all the directions of the terminal, the facing direction of the camera may be determined according to a measured direction of the terminal through the compass APP.

Fig.1B is a schematic view showing a facing direction of a camera according to the embodiment. Fig.1B (1) is a schematic view showing a facing direction of a camera, for example, in a mobile phone of which a reading direction is vertical; and Fig.1B (2) is a schematic view showing a facing direction of a camera, for example, in a tablet of which a reading direction is lateral. In Fig.1B, a small dot at a back side of the terminal is the camera, and the facing direction is identical with the facing direction of the terminal, i.e., a direction pointing perpendicularly from a front side of the terminal to the back side of the terminal.

In step 103, the facing direction is displayed in the objective image.

An objective is facing the camera, therefore, the facing direction of the camera measured by the compass APP is an objective direction, and the facing direction is displayed in the objective image, i.e., the objective direction may be provided to the user.

Accordingly, through the method for measuring a direction provided by the present disclosure, while the terminal runs the compass APP, the camera is started, and an objective image is acquired through the camera; a facing direction of the camera is determined through the compass APP; and the facing direction is displayed in the objective image. Therefore, the facing direction of the camera may be served as the objective direction to be directly displayed in the objective image, so that the issue that the terminal cannot provide a direction in an objective image to the user may be solved, and thus an effect of expanding the function of direction measurement of the terminal is achieved.

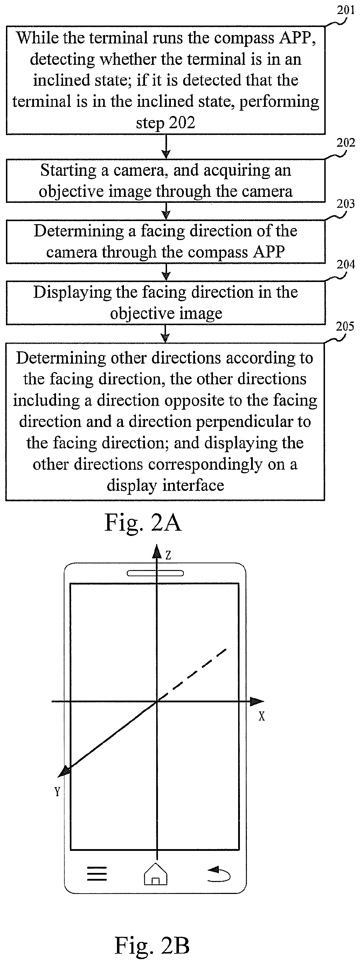

Fig.2A is a flow chart showing a method for measuring a direction according to another exemplary embodiment. As shown in Fig.2A, the method for measuring a direction is applied to a terminal including a camera and a compass APP, and the method includes the following steps.

In step 201, while the terminal runs the compass APP, it is detected whether the terminal is in an inclined state. If it is detected that the terminal is in the inclined state, the process proceeds to step 202.

The method for measuring direction provided by the embodiments is generally applied to measurement of an objective direction. Therefore, if no included angle exists between the terminal and a horizontal plane, a photographing angle of the camera is perpendicular to the ground, and the objective direction cannot be measured. Therefore, in order to avoid the waste of resources by triggering a process of a direction measurement in case where the terminal cannot measure an objective direction, it may be detected whether the terminal is in the inclined state. If the terminal is in the inclined state, the process of the direction measurement is started, and the direction measurement is performed by starting the camera pre-installed in the terminal; and if the terminal is in a horizontal state, the process of the direction measurement is not started.

The detecting whether the terminal is in the inclined state includes the follows.
1) An inclined angle between the terminal and the horizontal plane is measured through a direction sensor in the terminal.
2) It is detected whether the inclined angle falls into a preset angle range.
3) If it is detected that the inclined angle falls into the preset angle range, it is determined that the terminal is in the inclined state.

When it is measured whether the terminal is in the inclined state, the terminal starts the direction sensor pre-installed in the terminal, and the inclined direction between the terminal and the horizontal plane is measured by the direction sensor. The inclined direction refers to a rotating direction of the terminal interface rotated from a direction of a bottom side or a lateral side of the terminal to the current posture, when the terminal interface faces upward and is parallel with the horizontal plane.

In this embodiment, the direction sensor is a gyroscope sensor and/or an accelerometer sensor. The inclined direction of the terminal may be measured through the direction sensor according to various well known techniques, and the description thereof will not be repeated herein.

After acquiring the inclined direction measured through the direction sensor, the terminal compares the inclined direction with the preset angle range. If the inclined angle falls into the angle range, it is determined that the terminal is in the inclined state; and if the inclined angle does not fall into the angle range, it is determined that the terminal is in the horizontal state. The angle range may be the angle range is (45°, 135°), or is modified to (5°, 175°), and so on.

It should be noted that, if the inclined angle is greater than a predetermined value, the direction indicated by the terminal may be a direction opposite to the facing direction, rather than the facing direction. Therefore, in order to guarantee the accuracy of the direction measurement, the predetermined value may be set as the maximum value of the angle range.

In step 202, the camera is started, and an objective image is acquired through the camera.

When the camera is in an ON state, the camera takes photos for the objective image in real time, and displays the photographed objective image on the display interface.

In step 203, a facing direction of the camera is determined through the compass APP.

Since the camera is mounted in the terminal and the compass APP may measure all the directions of the terminal, the facing direction of the camera may be determined according to a measured direction of the terminal through the compass APP.

The determining a facing direction of the camera through the compass APP includes the follows:
1) An posture of the terminal is determined, and each direction of the terminal are determined through the compass APP.
2) The facing direction of the camera is determined according to the posture of the terminal and each direction of the terminal.

A coordinate system is established in advance in the terminal, therefore, parameters in respect to each axis while the terminal is in the current posture may be measured through the direction sensor, and the posture of the terminal may be determined according to the measured parameters. The embodiments are described by taking a common used manner of establishing a coordinate system in the terminal of which the reading direction is vertical as an example. The terminal interface is set as an *xz* plane, wherein, a center point of the terminal is an origin point of the coordinate system; an axis pointing to a left side of the terminal is a positive semi axis of an *x* axis; an axis perpendicular to the *x* axis on the terminal interface is a *z* axis; an axis pointing to an upper side of the terminal in the *xz* plane is a positive semi axis of the *z* axis; an axis perpendicular to the display plane is a *y* axis; and an axis pointing to an upper side of the terminal outside the *xz* plane is a positive semi axis of the *y* axis, referring to the schematic view as showing in Fig. 2B which shows the manner of establishing a coordinate system shown.

It is assumed that the parameters are angles respectively rotating around each of the axes, then a first parameter of the terminal rotating around the *x* axis, a second parameter rotating around the *y* axis and a third parameter rotating around the *z* axis may be measured through the direction sensor, and the posture of the terminal may be determined according to the measured three parameters. The posture of the terminal may be measured by a gyroscope sensor, and may also be measured by a combination of a gyroscope sensor and an accelerometer sensor, which is not limited by the embodiments.

The compass APP measures all the directions of the terminal according to the posture of the terminal. In case where the camera is located at the back side of the terminal, the facing direction of the camera is the facing direction of the terminal; and in case where the camera is located at the front side of the terminal, the facing direction of the camera is opposite to the facing direction of the terminal. The facing direction of the terminal refers to a direction pointing perpendicularly from the front side of the terminal to the back side of the terminal.

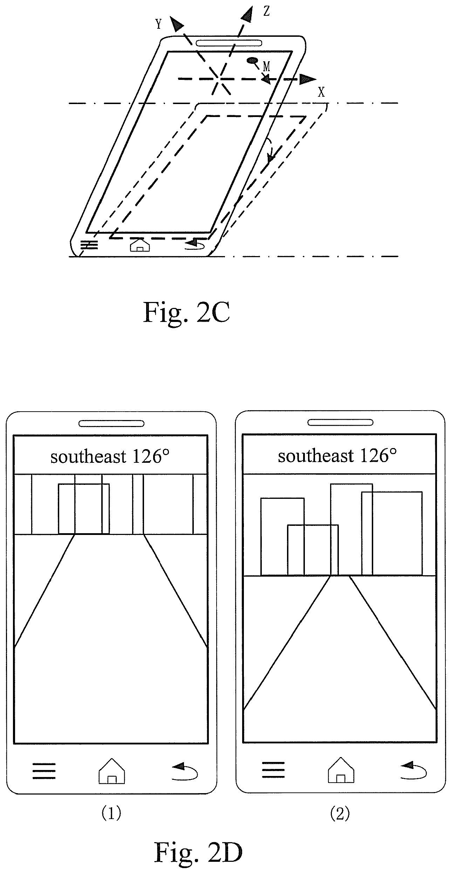

In case where the display interface is perpendicular to the horizontal plane, the facing direction of the camera may be referred to the schematic view shown in Fig.1B. In case where the display interface is not perpendicular to the horizontal plane, the facing direction of the camera may be referred to the schematic view shown in Fig.2C. In Fig.2C, the established coordinate system of the terminal is represented by an *X* axis, a *Y* axis and a Z axis, the facing direction of the camera is represented by an arrow *M* which is parallel with the *Y* axis and in an opposite direction of the *Y* axis in direction.

Optionally, in order to make the user know the rotating direction, during the turning of the terminal, the direction sensor may determine the facing direction of the camera every a predetermined interval. For example, if it is assumed that the terminal rotates counterclockwise from a horizontal position around a bottom side, Fig.2D is a schematic view showing an application of a direction measurement according to the embodiment. Fig.2D (1) shows a display interface in case where the rotating angle is relatively small, and Fig.2D (2) shows a display interface in case where the rotating angle is relatively large.

In step 204, the facing direction is displayed in the objective image.

The objective is facing the camera, therefore, the facing direction of the camera measured by the compass APP is an objective direction, i.e., the objective direction may be provided to the user.

The terminal may display in real time the measured facing direction of the camera in the objective image. The terminal may display the facing direction in the objective image in a form of a pointer, or, may display the facing direction in the objective image in a form of a numeral, to improve the accuracy in indication of the direction.

In step 205, other directions are determined according to the facing direction, the other directions includes a direction opposite to the facing direction and a direction perpendicular to the facing direction; and the other directions are displayed correspondingly on the display interface.

The terminal may calculate the direction opposite to the facing direction and the direction perpendicular to the facing direction according to the facing direction of the camera, and displays the calculated directions respectively at corresponding positions on the display interface.

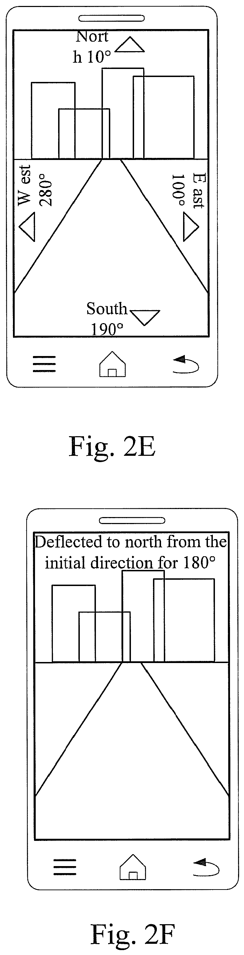

Fig.2E is a schematic view showing a terminal displaying a direction according to the embodiment. If the compass APP measures that the facing direction of the camera is "north 10°" and displays "north 10°" on the upper side of the display interface, the "north 10°" direction is rotated clockwise for 90 degree and an "east 100°" direction, which is perpendicular to "north 10°", is obtained and is displayed on the right side of the display interface; the "north 10°" direction is rotated clockwise for 180 degree and an "south 190°" direction, which is opposite to "north 10°", is obtained and is displayed on the lower side of the display interface; and the "north 10°" direction is rotated clockwise for 270 degree and an "west 280°" direction, which is perpendicular to "north 10°", is obtaiend and is displayed on the left side of the display interface.

It should be noted that, the method also includes the follows
1) A reference direction is preset.
2) A deflecting angle of the facing direction in respect to the reference direction is calculated.
3) The deflecting angle is displayed on the display interface.

The reference angle may be set and modified. For example, the initial direction is "north 0°", or, the initial direction is "southeast 130°".

Fig.2F is a schematic view showing an application of deflecting a direction according to the embodiment. The preset reference direction is "north 0°". If it is assumed that the facing direction measured by the terminal is "south 180°", the calculated deflecting angle is 180°, a prompt "deflected to north from the initial direction for 180°" is displayed on the display interface, to indicate that the object is deflected in respect to the reference direction.

Accordingly, through the method for measuring a direction provided by the present disclosure, while the terminal runs the compass APP, the camera is started, and an objective image is acquired through the camera; a facing direction of the camera is determined through the compass APP; and the facing direction is displayed in the objective image. Therefore, the facing direction of the camera may be served as the objective direction to be directly displayed in the objective image, so that the issue that the terminal cannot provide a direction in an objective image to the user may be solved, and thus achieve an effect of expanding the function of direction measurement of the terminal is achieved.

In addition, by presetting a reference direction, calculating a deflecting angle of the facing direction in respect to the reference direction and displaying the deflecting angle on the display interface, the direction of the object in the objective image is determined according to the set reference direction and the displayed deflecting angle, so as to achieve an effect of further expanding the function of direction measurement of the terminal.

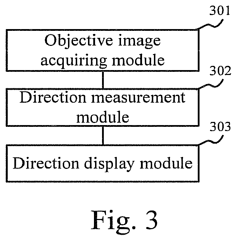

Fig.3 is a block diagram showing an apparatus for measuring a direction according to an exemplary embodiment. As shown in Fig.3, the apparatus for measuring a direction may be applied to, but not limited to, a terminal including a camera and a compass APP, and includes: an objective image acquiring module 301, a direction measurement module 302 and a direction display module 303.

The objective image acquiring module 301 is configured, while the terminal runs the compass APP, to start the camera and to acquire an objective image through the camera.

The direction measurement module 302 is configured to determine a facing direction of the camera through the compass APP.

The direction display module 303 is configured to display the facing direction measured by the direction measurement module 302 in the objective image acquired by the objective image acquiring module 301.

Accordingly, through the apparatus for measuring a direction provided by the present disclosure, while the terminal runs the compass APP, the camera is started, and an objective image is acquired through the camera; a facing direction of the camera is determined through the compass APP; and the facing direction is displayed in the objective image. Therefore, the facing direction of the camera may be served as the objective direction to be directly displayed in the objective image, so that the issue that the terminal cannot provide a direction in an objective image to the user may be solved, and thus achieve an effect of expanding the function of direction measurement of the terminal is achieved.

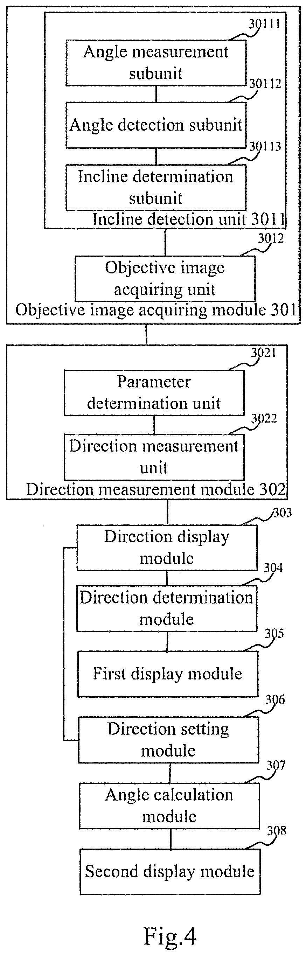

Fig.4 is a block diagram showing an apparatus for measuring a direction according to an exemplary embodiment. As shown in Fig.4, the apparatus for measuring a direction is applied to a terminal including a camera and a compass APP, and includes: an objective image acquiring module 301, a direction measurement module 302 and a direction display module 303.

The objective image acquiring module 301 is configured, while the terminal runs the compass APP, to start the camera and to acquire an objective image through the camera.

The direction measurement module 302 is configured to determine a facing direction of the camera through the compass APP.

The direction display module 303 is configured to display the facing direction measured by the direction measurement module 302 in the objective image acquired by the objective image acquiring module 301.

The objective image acquiring module 301 includes: an incline detection unit 3011 and an objective image acquiring unit 3012.

The incline detection unit 3011 is configured, while the terminal runs the compass APP, to detect whether the terminal is in an inclined state.

The objective image acquiring unit 3012 is configured, if the incline detection unit 3011 detects that the terminal is in the inclined state, to start the camera and to acquire an objective image through the camera.

Optionally, the incline detection unit 3011 includes: an angle measurement subunit 30111, an angle detection subunit 30112 and an incline determination subunit 30113.

The angle measurement subunit 30111 is configured to measure an inclined angle between the terminal and a horizontal plane through a direction sensor in the terminal.

The angle detection subunit 30112 is configured to detect whether the inclined angle detected by the angle measurement subunit 30111 falls into a preset angle range.

The incline determination subunit 30113 is configured , if the angle detection subunit 30112 detects that the inclined angle falls into the preset angle range, to determine that the terminal is in the inclined state.

Optionally, the direction measurement module 302 includes: a parameter determination unit 3021 and a direction measurement unit 3022.

The parameter determination unit 3021 is configured to determine an posture of the terminal, and to determine each direction of the terminal through the compass APP.

The direction measurement unit 3022 is configured to determine the facing direction of the camera according to the posture of the terminal and each direction of the terminal determined by the parameter determination unit 3021.

Optionally, the apparatus also includes: a direction determination module 304 and a first display module 305.

The direction determination module 304 is configured to determine other directions according to the facing direction, the other directions includes a direction opposite to the facing direction and a direction perpendicular to the facing direction.

The first display module 305 is configured to display the other directions correspondingly on the display interface.

The apparatus also includes: a direction setting module 306, an angle calculation module 307 and a second display module 308.

The direction setting module 306 is configured to preset a reference direction.

The angle calculation module 307 is configured to calculate a deflecting angle of the facing direction in respect to the reference direction.

The second display module 308 is configured to display the deflecting angle calculated by the angle calculation module 307 on the display interface.

Accordingly, through the apparatus for measuring a direction provided by the present disclosure, while the terminal runs the compass APP, the camera is started, and an objective image is acquired through the camera; a facing direction of the camera is determined through the compass APP; and the facing direction is displayed in the objective image. Therefore, the facing direction of the camera may be served as the objective direction to be directly displayed in the objective image, so that the issue that the terminal cannot provide a direction in an objective image to the user may be solved, and thus achieve an effect of expanding the function of direction measurement of the terminal is achieved.

In addition, by presetting a reference direction; calculating a deflecting angle of the facing direction in respect to the reference direction; and displaying the deflecting angle on the display interface, the direction of the object in the objective image is determined according to the set reference direction and the displayed deflecting angle, so as to achieve an effect of further expanding the function of direction measurement of the terminal.

With respect to the apparatus in the above embodiments, specific operations performed by each module have been described in detail in the embodiments of related method, and detailed description thereof is omitted herein.

A terminal is also provided by exemplary embodiments of the present disclosure, which may perform the method for measuring a direction provided by the present disclosure. The terminal includes: a processor; and a memory, configured to store instructions executable by the processor. The processor is configured to: start the camera and acquire an objective image through the camera while the terminal runs the compass APP; determine a facing direction of the camera through the compass APP; and display the facing direction in the objective image.

With respect to the terminal in the above embodiments, specific operations performed by each modules have been described in detail in the embodiments of related method, and detailed description thereof is omitted herein.

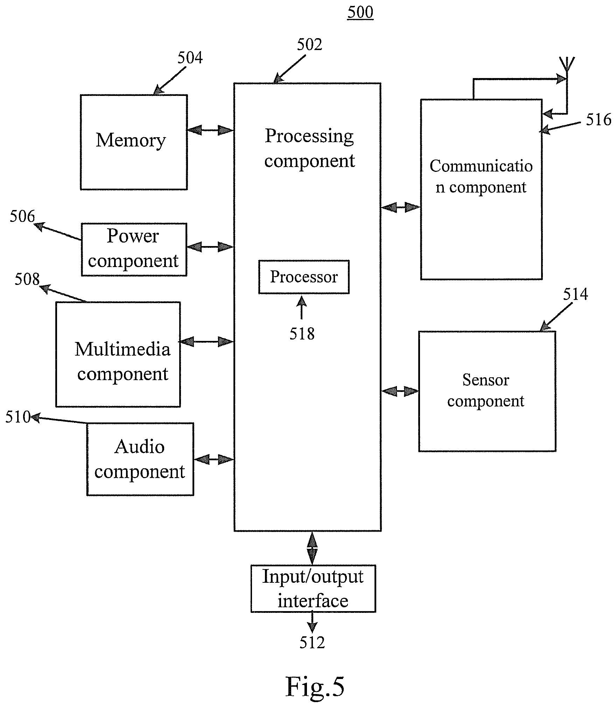

Fig.5 is a block diagram showing a device 500 for measuring a direction according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method, implemented by a terminal including a display interface, a camera and a direction sensor, the method comprising the steps of:
starting (101) the camera and acquiring an objective image through the camera, said starting step comprising:
o detecting (201) whether the terminal is in an inclined state relative to an horizontal plane using the direction sensor, wherein it is detected that the terminal is in said inclined state if an inclined angle measured by the direction sensor between the terminal and the horizontal plan falls within a preset angle range ; and
∘ starting (202) the camera to acquire an objective image through the camera only if it is detected that the terminal is in the inclined state;
determining (102) a facing direction of the camera based on posture angles of the terminal measured by the direction sensor around three axis x, y and z of a coordinate system of said terminal, said direction sensor being a gyroscope sensor and/or an accelerometer sensor, wherein the facing direction points perpendicularly from the front side of the terminal to the back side of the terminal;
**characterized in that** the method further comprises the steps of:
presetting a reference direction;
calculating a deflecting angle value of the facing direction in respect to the reference direction; and
displaying the deflecting angle value in the objective image on the display interface.

2. The method according to claim 1, **characterized in that**, the method further comprises:
determining (205) other directions according to the facing direction, the other directions comprising a direction opposite to the facing direction and a direction perpendicular to the facing direction; and
correspondingly displaying (205) the other directions on a display interface.

3. A terminal, comprising:
a camera;
a display interface;
a direction sensor;
an objective image acquiring module (301) configured to start the camera and to acquire an objective image through the camera, wherein the objective image acquiring module (301) comprises:
∘ an incline detection unit (3011) configured to detect whether the terminal is in an inclined state relative to a horizontal plane using the direction sensor, wherein it is detected that the terminal is in said inclined state if an inclined angle measured by the direction sensor between the terminal and the horizontal plan falls within a preset angle range; and
∘ an objective image acquiring unit (3012) configured, if the incline detection unit (3011) detects that the terminal is in the inclined state, to start the camera to acquire an objective image through the camera;
a direction measurement module (302) configured to determine a facing direction of the camera based on posture angles of the terminal measured by the direction sensor around three axis x, y and z of a coordinate system of said terminal, said direction sensor being a gyroscope sensor and/or an accelerometer sensor, wherein the facing direction points perpendicularly from the front side of the terminal to the back side of the terminal;
**characterized in that** the terminal further comprises:
a direction setting module (306) configured to preset a reference direction;
an angle calculation module (307) configured to calculate a deflecting angle value of the facing direction in respect to the reference direction; and
a second display module (308) configured to display the deflecting angle value calculated by the angle calculation module (307) in the objective image on the display interface.

4. The terminal according to claim 3, **characterized in that**, the apparatus further comprises:
a direction determination module (304) configured to determine other directions according to the facing direction, the other directions comprising a direction opposite to the facing direction and a direction perpendicular to the facing direction; and
a first display module (305) configured to display the other directions correspondingly on the display interface.

5. A computer program including instructions for executing the steps of a method for measuring a direction according to any one of claims 1 to 2 when said program is executed by a terminal according to claims 3 or 4.

6. A recording medium readable by a computer and having recorded thereon a computer program including instructions for executing the steps of a method for measuring a direction according to any one of claims 1 to 2.

## Patentansprüche

1. Verfahren, das durch ein Endgerät umgesetzt wird, das eine Anzeigeschnittstelle, eine Kamera und einen Richtungssensor beinhaltet, wobei das Verfahren die Schritte umfasst des:
Startens (101) der Kamera und Aufnehmens eines objektiven Bildes durch die Kamera, wobei der Schritt des Startens umfasst:
∘ Erkennen (201), ob sich das Endgerät in einem geneigten Zustand im Verhältnis zu einer horizontalen Ebene befindet, unter Verwendung des Richtungssensors, wobei erkannt wird, dass sich das Endgerät in dem geneigten Zustand befindet, wenn ein durch den Richtungssensor zwischen dem Endgerät und der horizontalen Ebene gemessener Neigungswinkel innerhalb eines voreingestellten Winkelbereichs liegt, und
∘ Starten (202) der Kamera, um ein objektives Bild durch die Kamera aufzunehmen, nur dann, wenn erkannt wird, dass sich das Endgerät in dem geneigten Zustand befindet,
Bestimmens (102) einer Blickrichtung der Kamera auf Grundlage von Lagewinkeln des Endgeräts, die durch den Richtungssensor um drei Achsen x, y und z eines Koordinatensystems des Endgeräts gemessen werden, wobei der Richtungssensor ein Gyroskopsensor und/oder ein Beschleunigungssensor ist, wobei die Blickrichtung senkrecht von der Vorderseite des Endgeräts zu der Rückseite des Endgeräts zeigt,
**dadurch gekennzeichnet, dass** das Verfahren ferner die Schritte umfasst des:
Voreinstellens einer Referenzrichtung;
Berechnens eines Ablenkwinkelwerts der Blickrichtung in Bezug auf die Referenzrichtung, und
Anzeigens des Ablenkwinkelwerts in dem objektiven Bild auf der Anzeigeschnittstelle.

2. Verfahren nach Anspruch 1, **dadurch gekennzeichnet, dass** das Verfahren ferner umfasst:
Bestimmen (205) anderer Richtungen gemäß der Blickrichtung, wobei die anderen Richtungen eine Richtung entgegengesetzt zu der Blickrichtung und eine Richtung senkrecht zu der Blickrichtung umfassen, und
entsprechendes Anzeigen (205) der anderen Richtungen auf einer Anzeigeschnittstelle.

3. Endgerät, umfassend:
eine Kamera,
eine Anzeigeschnittstelle,
einen Richtungssensor,
ein Modul (301) zum Aufnehmen objektiver Bilder, das dazu ausgestaltet ist, die Kamera zu starten und ein objektives Bild durch die Kamera aufzunehmen, wobei das Modul (301) zum Aufnehmen objektiver Bilder umfasst:
∘ eine Neigungserkennungseinheit (3011), die dazu ausgestaltet ist, unter Verwendung des Richtungssensors zu erkennen, ob sich das Endgerät in einem geneigten Zustand im Verhältnis zu einer horizontalen Ebene befindet, wobei erkannt wird, dass sich das Endgerät in dem geneigten Zustand befindet, wenn ein durch den Richtungssensor zwischen dem Endgerät und der horizontalen Ebene gemessener Neigungswinkel innerhalb eines voreingestellten Winkelbereichs liegt, und
∘ eine Einheit (3012) zum Aufnehmen objektiver Bilder, die dazu ausgestaltet ist, wenn die Neigungserkennungseinheit (3011) erkennt, dass sich das Endgerät in dem geneigten Zustand befindet, die Kamera zu starten, um ein objektives Bild durch die Kamera aufzunehmen,
ein Richtungsmessmodul (302), das dazu ausgestaltet ist, eine Blickrichtung der Kamera auf Grundlage von Lagewinkeln des Endgeräts zu bestimmen, die durch den Richtungssensor um drei Achsen x, y und z eines Koordinatensystems des Endgeräts gemessen werden, wobei der Richtungssensor ein Gyroskopsensor und/oder ein Beschleunigungssensor ist, wobei die Blickrichtung senkrecht von der Vorderseite des Endgeräts zu der Rückseite des Endgeräts zeigt,
**dadurch gekennzeichnet, dass** das Endgerät ferner umfasst:
ein Richtungseinstellungsmodul (306), das dazu ausgestaltet ist, eine Referenzrichtung voreinzustellen,
ein Winkelberechnungsmodul (307), das dazu ausgestaltet ist, einen Ablenkwinkelwert der Blickrichtung in Bezug auf die Referenzrichtung zu berechnen, und
ein zweites Anzeigemodul (308), das dazu ausgestaltet ist, den durch das Winkelberechnungsmodul (307) berechneten Ablenkwinkelwert in dem objektiven Bild auf der Anzeigeschnittstelle anzuzeigen.

4. Endgerät nach Anspruch 3, **dadurch gekennzeichnet, dass** die Vorrichtung ferner umfasst:
ein Richtungsbestimmungsmodul (304), das dazu ausgestaltet ist, andere Richtungen gemäß der Blickrichtung zu bestimmen, wobei die anderen Richtungen eine Richtung entgegengesetzt zu der Blickrichtung und eine Richtung senkrecht zu der Blickrichtung umfassen, und
ein erstes Anzeigemodul (305), das dazu ausgestaltet ist, die anderen Richtungen entsprechend auf der Anzeigeschnittstelle anzuzeigen.

5. Computerprogramm, das Anweisungen zum Ausführen der Schritte eines Verfahrens zum Messen einer Richtung nach einem der Ansprüche 1 bis 2, wenn das Programm von einem Endgerät nach den Ansprüchen 3 oder 4 ausgeführt wird, beinhaltet.

6. Aufzeichnungsmedium, das für einen Computer lesbar ist und auf dem ein Computerprogramm aufgezeichnet ist, das Anweisungen zum Ausführen der Schritte eines Verfahrens zum Messen einer Richtung nach einem der Ansprüche 1 bis 2 beinhaltet.

## Revendications

1. Procédé, mis en oeuvre par un terminal incluant une interface d'affichage, une caméra et un capteur de direction, le procédé comprenant les étapes de :
démarrage (101) de la caméra et acquisition d'une image objective via la caméra, ladite étape de démarrage comprenant :
- le fait de détecter (201) si le terminal se trouve ou non dans un état incliné par rapport à un plan horizontal à l'aide du capteur de direction, dans lequel il est détecté que le terminal se trouve dans ledit état incliné si un angle incliné mesuré par le capteur de direction entre le terminal et le plan horizontal tombe à l'intérieur d'une plage angulaire préréglée ; et
- le démarrage (202) de la caméra pour acquérir une image objective via la caméra uniquement s'il est détecté que le terminal se trouve dans l'état incliné ;
détermination (102) d'une direction de face de la caméra sur la base d'angles de position du terminal mesurés par le capteur de direction autour de trois axes x, y et z d'un système de coordonnées dudit terminal, ledit capteur de direction étant un capteur de gyroscope et/ou un capteur d'accéléromètre, dans lequel la direction de face pointe perpendiculairement depuis le côté frontal du terminal vers le côté arrière du terminal ;
**caractérisé en ce que** le procédé comprend en outre les étapes de :
préréglage d'une direction de référence ;
calcul d'une valeur d'angle de déflexion de la direction de face par rapport à la direction de référence ; et
affichage de la valeur d'angle de déflexion dans l'image objective sur l'interface d'affichage.

2. Procédé selon la revendication 1, **caractérisé en ce que**, le procédé comprend en outre :
la détermination (205) d'autres directions en fonction de la direction de face, les autres directions comprenant une direction opposée à la direction de face et une direction perpendiculaire à la direction de face ; et
l'affichage (205) de façon correspondante des autres directions sur une interface d'affichage.

3. Terminal, comprenant :
une caméra ;
une interface d'affichage ;
un capteur de direction ;
un module d'acquisition d'image objective (301) configuré pour démarrer la caméra et pour acquérir une image objective via la caméra, dans lequel le module d'acquisition d'image objective (301) comprend :
- une unité de détection d'inclinaison (3011) configurée pour détecter si le terminal se trouve ou non dans un état incliné par rapport à un plan horizontal à l'aide du capteur de direction, dans lequel il est détecté que le terminal se trouve dans ledit état incliné si un angle incliné mesuré par le capteur de direction entre le terminal et le plan horizontal tombe à l'intérieur d'une plage angulaire préréglée ; et
- une unité d'acquisition d'image objective (3012) configurée, si l'unité de détection d'inclinaison (3011) détecte que le terminal se trouve dans l'état incliné, pour démarrer la caméra afin d'acquérir une image objective via la caméra ;
un module de mesure de direction (302) configuré pour déterminer une direction de face de la caméra sur la base d'angles de position du terminal mesurés par le capteur de direction autour de trois axes x, y et z d'un système de coordonnées dudit terminal, ledit capteur de direction étant un capteur de gyroscope et/ou un capteur d'accéléromètre, dans lequel la direction de face pointe perpendiculairement depuis le côté frontal du terminal vers le côté arrière du terminal ;
**caractérisé en ce que** le terminal comprend en outre :
un module de réglage de direction (306) configuré pour prérégler une direction de référence ;
un module de calcul d'angle (307) configuré pour calculer une valeur d'angle de déflexion de la direction de face par rapport à la direction de référence ; et
un second module d'affichage (308) configuré pour afficher la valeur d'angle de déflexion calculée par le module de calcul d'angle (307) dans l'image objective sur l'interface d'affichage.

4. Terminal selon la revendication 3, **caractérisé en ce que**, l'appareil comprend en outre :
un module de détermination de direction (304) configuré pour déterminer d'autres directions en fonction de la direction de face, les autres directions comprenant une direction opposée à la direction de face et une direction perpendiculaire à la direction de face ; et
un premier module d'affichage (305) configuré pour afficher les autres directions de façon correspondante sur l'interface d'affichage.

5. Programme informatique incluant des instructions afin d'exécuter les étapes d'un procédé pour mesurer une direction selon l'une quelconque des revendications 1 à 2 lorsque ledit programme est exécuté par un terminal selon les revendications 3 ou 4.

6. Support d'enregistrement lisible par un ordinateur et présentant enregistré sur lui un programme informatique incluant des instructions pour exécuter les étapes d'un procédé pour mesurer une direction selon l'une quelconque des revendications 1 à 2.
